# EUROPÄISCHE PATENTSCHRIFT

(11) **EP 2 504 530 B1**
(45) Veröffentlichungstag und Bekanntmachung des Hinweises auf die Patenterteilung: **09.01.2019**
(21) Anmeldenummer: 10778987.7
(22) Anmeldetag: 05.11.2010
(51) Int. Cl.: F01D 17/16, F02C 6/12

(54) **Abgasturboladers**
turbocharging device
turbocompresseur

(30) Priorität: 23.11.2009 DE 102009047006
(43) Veröffentlichungstag der Anmeldung: 03.10.2012
(73) Patentinhaber: BMTS Technology GmbH & Co. KG, 70376 Stuttgart (DE)
(72) Erfinder: MAIER, Dieter, 87549 Rettenberg (DE); ROHRMOSER, Klaus, 87544 Blaichach (DE); KAWA, Dieter, 71729 Erdmannhausen (DE); MAIR, Andreas, 88260 Argenbuehl (DE)
(74) Vertreter: BRP Renaud & Partner mbB Rechtsanwälte Patentanwälte Steuerberater
(86) Internationale Anmeldenummer: PCT/EP2010/066921
(87) Internationale Veröffentlichungsnummer: WO 2011/061077

(56) Entgegenhaltungen:
- EP-A1- 1 811 135
- WO-A1-2006/032827
- DE-A1- 1 476 781
- DE-A1- 10 225 679
- DE-A1-102008 000 859
- DE-C1- 19 752 534
- DE-U1-202005 008 606
- US-A- 2 671 634
- US-A- 2 857 092
- US-A- 3 033 519
- US-A- 3 538 579
- US-A- 4 685 869
- US-B1- 6 210 106
- US-B2- 6 802 692

## Beschreibung

Die Erfindung betrifft einen Abgasturbolader eines Fahrzeugs, mit einer Turbine, die mindestens eine Strömungsleitschaufel für ein Medium aufweist, wobei die Strömungsleitschaufel an einem Gehäusebauteil der Aufladeeinrichtung mittels einer in einer Ausnehmung des Gehäusebauteils einsitzenden Lagerwelle schwenkbar gelagert ist.

### Stand der Technik

Aufladeeinrichtungen mit den Merkmalen des Oberbegriffs des Anspruchs 1 sind aus dem Stand der Technik bekannt. Beispielsweise sei auf die DE 1 004 766 A1, die DE 698 27 504 T2 und die DE 102 62 006 B4 verwiesen. Die Aufladeeinrichtung ist beispielsweise ein Abgasturbolader, welcher über eine variable beziehungsweise verstellbare Turbinengeometrie (VTG) verfügt. Eine solche variable Turbinengeometrie mit drehbar gelagerten Strömungsleitschaufeln ist in heutigen Brennkraftmaschinen für Pkw und Lkw - insbesondere bei Dieselbrennkraftmaschinen - Stand der Technik. Durch den Einsatz der variablen Turbinengeometrie ist eine deutliche Verbesserung des Ansprechverhaltens der Brennkraftmaschine erzielbar. Mittels der verstellbaren Strömungsleitschaufel kann ein Strömungsquerschnitt der Turbine verändert werden. Dabei wird der Strömungsquerschnitt beispielsweise an den Betriebszustand der Brennkraftmaschine und/oder der Aufladeeinrichtung angepasst, um eine Verminderung des Verbrauchs beziehungsweise der Emissionen zu erreichen. Die Veränderung des Strömungsquerschnitts dient zur Anpassung des Aufstauverhaltens der Turbine. Zu diesem Zweck ist die Strömungsleitschaufel drehbar beziehungsweise schwenkbar an dem Gehäusebauteil - welches auch als Lagerscheibe bezeichnet werden kann - befestigt. Dabei ist es das Ziel, die Leitschaufel derart zu lagern, dass über eine Lebensdauer der Aufladeeinrichtung hinweg ein Verklemmen der Strömungsleitschaufel verhindert wird, sodass ein leichtgängiges Verstellen gewährleistet ist. Die Strömungsleitschaufel soll insoweit eine definierte Bewegung innerhalb des die Turbine durchströmenden Abgasstromes durchführen. Dies ist insbesondere zwischen Begrenzungsflächen vorgesehen, die beispielsweise zumindest teilweise von dem Gehäusebauteil beziehungsweise der Lagerscheibe und einer dieser gegenüberliegenden Deckscheibe gebildet werden. Betätigt werden die Strömungsleitschaufeln über eine Verstelleinrichtung, wobei eine zur Verstellung benötigte Kraft von außerhalb eines Gehäuses der Aufladeeinrichtung eingebracht wird. Die Strömungsleitschaufel ist mittels der Lagerwelle gelagert, wobei letztere in die Ausnehmung des Gehäusebauteils eingreift. Aus dem Stand der Technik ist es bekannt, den Durchmesser der Lagerwelle über die gesamte Länge der Lagerwelle konstant auszuführen oder die Lagerwelle mit einer Einschnürung zu versehen, sodass sie an dieser Stelle nicht mit einer Innenwand der Ausnehmung in Kontakt steht. Auf diese Weise kann die Leichtgängigkeit der Lagerwelle verbessert werden. Eine solche Ausbildung erschwert jedoch die Herstellung der Strömungsleitschaufel beziehungsweise der Lagerwelle in einem Gießverfahren, insbesondere Spritzgießverfahren.
Die US 3,033,519 A zeigt einen Abgasturbolader mit Strömungsleitschaufeln, die über eine in einers Ausnehmung eines Gehäusebauteils des Abgasturboladers gelagerten Lagerwelle gelagert sind. Die Ausnehmung weist dabei eine gestufte Form auf.
Aus der EP 1 811 135 A1 ist eine Abgasturbolader mit Strömungsleitschaufeln bekannt. Die Strömungsleitshaufeln sind über eine Lagerwelle drehbar gelagert, wobei die Lagerwelle in einer Buchse gelagert ist, die in einer Ausnehmung eines Gehäuses des Abgasturboladers angeordnet ist. Dieses Dokument offenbart die Merkmale des Oberbegriffs des Anspruchs 1.
Die DE 197 52 534 C1 beschreibt einen Abgasturbolader mit Strömungsleitschaufeln, die mittlels einer Lagerwelle drehbar sind, die in einer Ausnehmung eines Gehäuses des Abgasturboladers gelagert ist. Die Ausnehmung weist dabei eine gestufte Form auf.

### Offenbarung der Erfindung

Demgegenüber weist der Abgasturbolader mit dem in Anspruch 1 genannten Merkmalen den Vorteil auf, dass eine einfachere und kostengünstigere Herstellung möglich ist und insbesondere Spritzgießverfahren eingesetzt werden können, ohne dass Schieberwerkzeuge zur Entformung der Lagerwelle notwendig sind. Dies wird erfindungsgemäß erreicht, indem die Lagerwelle und die Ausnehmung mindestens zwei in axialer Richtung voneinander beabstandete Lagerstellen mit unterschiedlichen Durchmessern ausbilden. Sowohl die Ausnehmung des Gehäusebauteils als auch die Lagerwelle weisen vorzugsweise einen runden Querschnitt auf. Gemeinsam bilden sie die mindestens zwei Lagerstellen aus. Dabei ist es vorgesehen, dass die Lagerwelle und die Innenwand der Ausnehmung höchstens im Bereich der Lagerstelle miteinander in Berührkontakt stehen. Auf diese Weise wird die Leichtgängigkeit der Strömungsleitschaufel beziehungsweise der Lagerwelle verbessert, da die Lagerwelle nicht über ihre gesamte Längserstreckung, sondern lediglich teil- beziehungsweise abschnittsweise, mit der Innenwand der Ausnehmung in Berührkontakt steht, womit ein einem Verstellmoment entgegenwirkendes Drehmoment (Drehwiderstand) verringert wird. Im Bereich der Lagerstelle wird der Durchmesser der Lagerwelle als Wellendurchmesser und der Durchmesser der Ausnehmung als Ausnehmungsdurchmesser bezeichnet. Es ist nun unerheblich, ob sich Wellendurchmesser und/oder Ausnehmungsdurchmesser der Lagerstellen voneinander unterscheiden. Es kann sowohl vorgesehen sein, dass der Wellendurchmesser über die gesamte Länge der Lagerwelle konstant bleibt, während sich der Ausnehmungsdurchmesser ändert, um die unterschiedlichen Durchmesser der Lagerstellen zu erzielen, als auch dass sich der Wellendurchmesser ändert, während der Ausnehmungsdurchmesser konstant bleibt. Ebenso kann es vorgesehen sein, dass sich sowohl der Wellendurchmesser als auch der Ausnehmungsdurchmesser ändern. Es ist also vorgesehen, dass die Lagerwelle an den Lagerstellen unterschiedliche Wellendurchmesser aufweist und die Ausnehmung kann an den Lagerstellen unterschiedliche Ausnehmungsdurchmesser aufweisen. Insbesondere dadurch, dass die Lagerwelle an den Lagerstellen unterschiedliche Wellendurchmesser aufweist, kann die Strömungsleitschaufel beziehungsweise die Lagerwelle mit formgebenden Herstellverfahren hergestellt werden, ohne dass eine Nachbearbeitung, wie beispielsweise Schleifen, notwendig ist. Bevorzugt ist dabei ein MIM- oder ein ähnlicher Prozess. Die Lagerstellen werden mit den unterschiedlichen Durchmessern durch eine kontuninuierliche Änderung des Wellendurchmessers ausgebildet. Auf diese Weise kann ein Schieberwerkzeug entfallen, welches ansonsten zur Entformung der Lagerwelle aus einer zur Herstellung verwendeten Gussform notwendig ist. Folglich kann auch die Herstellung eines Spritzgießwerkzeugs aufgrund der besseren Entformbarkeit der Lagerwelle einfacher und/oder kostengünstiger erfolgen. Anstatt dem MIM-Verfahren kann auch ein Feinguss-Verfahren oder dergleichen verwendet werden. Bedingt durch die geringeren Toleranzen der so hergestellten Strömungsleitschaufel beziehungsweise Lagerwelle werden Fertig- beziehungsweise Nachbearbeitungsschritte der Lagerwelle vermieden.

Eine Weiterbildung der Erfindung sieht vor, dass die Lagerstelle, welche den größeren Durchmesser aufweist, auf der der Strömungsleitschaufel zugewandten Seite angeordnet ist. Ausgehend von der Strömungsleitschaufel verringert sich also der Durchmesser der Lagerstelle. Insbesondere wenn die unterschiedlichen Durchmesser der Lagerstellen durch unterschiedliche Wellendurchmesser ausgebildet sind, kann auf diese Weise die Entformung der Strömungsleitschaufel beziehungsweise der Lagerwelle erleichtert werden.

Erfindungsgemäß ist zwischen den Lagerstellen eine kontinuierliche Änderung des Wellendurchmessers und/oder des Ausnehmungsdurchmessers vorgesehen. Vorzugsweise wird eine sprunghafte Änderung des Wellendurchmessers beziehungsweise des Ausnehmungsdurchmessers vermieden, um die Kerbwirkung so klein wie möglich zu halten. Bedingt durch eine sprunghafte Durchmesseränderung könnte es an der betroffenen Stelle zu einer örtlichen Spannungskonzentration kommen, womit die Materialbeanspruchung an dieser Stelle deutlich erhöht wäre. Aus diesem Grund wird die kontinuierliche Durchmesseränderung erfindungsgemäß vorgesehen.

Eine Weiterbildung der Erfindung sieht vor, dass zwischen den Lagerstellen eine kontinuierliche Änderung des Ausnehmungsdurchmessers vorgesehen ist. Vorzugsweise wird eine sprunghafte Änderung des Ausnehmungsdurchmessers vermieden, um die Kerbwirkung so klein wie möglich zu halten. Bedingt durch eine sprunghafte Durchmesseränderung könnte es an der betroffenen Stelle zu einer örtlichen Spannungskonzentration kommen, womit die Materialbeanspruchung an dieser Stelle deutlich erhöht wäre. Aus diesem Grund wird die kontinuierliche Durchmesseränderung bevorzugt vorgesehen.

Eine Weiterbildung der Erfindung sieht vor, dass im Bereich zumindest einer der Lagerstellen der Ausnehmungsdurchmesser im Wesentlichen dem Wellendurchmesser entspricht. Das bedeutet, dass die Lagerwelle in diesem Bereich unmittelbar an dem Gehäusebauteil gelagert ist, mit diesem also in Berührkontakt steht. Es ist also nicht notwendig, ein zusätzliches Zwischenelement zwischen Lagerwelle und der Innenwand der Ausnehmung vorzusehen, um die Lagerstelle auszubilden. Vorteilhafterweise ist der Wellendurchmesser geringfügig kleiner als der Ausnehmungsdurchmesser, um ein leichtgängiges Verstellen der Strömungsleitschaufeln mittels der Lagerwelle zu ermöglichen.

Eine Weiterbildung der Erfindung sieht vor, dass die Ausnehmung als Stufenausnehmung und/oder als Ausnehmung mit konstantem Durchmesser vorliegt. Im Falle der Stufenausnehmung kann die Ausnehmung beispielsweise mittels Bohrungen mit mindestens zwei unterschiedlichen Durchmessern erreicht werden. Es liegt somit eine Stufenbohrung vor. Ebenso kann es jedoch sein, dass die Ausnehmung einen konstanten Durchmesser aufweist, während die unterschiedlichen Durchmesser der Lagerstellen mit unterschiedlichen Wellendurchmessern realisiert sind.

Eine Weiterbildung der Erfindung sieht vor, dass der Lagerwelle mindestens ein Lagerelement zugeordnet ist. Das Lagerelement ist im Bereich der Lagerstelle angeordnet beziehungsweise dieser zugeordnet, sodass das Lagerelement die Lagerstelle zumindest mit ausbilden kann. Beispielsweise kann das Lagerelement als Ringelement vorliegen, welches auf der Lagerwelle oder in der Ausnehmung befestigt ist. Mit einem solchen Ringelement wird erreicht, dass der Ausnehmungsdurchmesser über die Länge der Ausnehmung konstant gehalten werden kann, während die unterschiedlichen Durchmesser der Lagerstellen mit unterschiedlichen Wellendurchmessern realisiert sind.

Eine Weiterbildung der Erfindung sieht vor, dass das Lagerelement kraftschlüssig, formschlüssig und/oder stoffschlüssig an der Lagerwelle befestigt ist. Alternativ kann das Lagerelement ebenso in die Ausnehmung des Gehäusebauteils eingebracht und dort kraftschlüssig, formschlüssig und/oder stoffschlüssig befestigt sein.

Eine Weiterbildung der Erfindung sieht vor, dass das Lagerelement Teil einer Verstelleinrichtung für die Lagerwelle ist, sodass die Verstelleinrichtung zumindest bereichsweise mit der Lagerwelle und der Ausnehmung zusammenwirkt, um die Lagerstelle auszubilden. Beispielsweise ist das Lagerelement Bestandteil eines Verstellhebels der Verstelleinrichtung. Dieser Verstellhebel wird verwendet, um ein Drehmoment auf die Lagerwelle aufzubringen und somit die Strömungsleitschaufel zu verstellen. Dabei ist es nun vorgesehen, dass das Lagerelement die Lagerwelle zumindest bereichsweise umgreift und gleichzeitig in die Ausnehmung eingreift. Auf diese Weise kann wiederum der Ausnehmungsdurchmesser konstant bleiben und unterschiedliche Wellendurchmesser vorliegen, um die unterschiedlichen Durchmesser der Lagerstellen auszubilden.

Eine Weiterbildung der Erfindung sieht vor, dass die Lagerwelle und die Leitschaufel als ein gemeinsames Bauteil, insbesondere mittels eines Spritzgießverfahrens, hergestellt sind. Eine solche Vorgehensweise wird besonders bevorzugt, wenn die Lagerwelle einen ausgehend von der Strömungsleitschaufel abnehmenden Wellendurchmesser aufweist. In diesem Fall kann bei der Herstellung des Bauteils ein Schieberwerkzeug zur Entformung entfallen, sodass sowohl die Herstellung des gemeinsamen Bauteils als auch ein Bereitstellen des Spritzgießwerkzeugs zur Herstellung des Bauteils einfacher und günstiger zu bewerkstelligen sind.

Die Erfindung wird im Folgenden anhand der in der Zeichnung dargestellten Ausführungsbeispiele näher erläutert, ohne dass eine Beschränkung der Erfindung erfolgt. Es zeigen:
- Figur 1: eine Aufladeeinrichtung im Querschnitt,
- Figur 2: eine aus dem Stand der Technik bekannte Strömungsleitschaufel mit einer Lagerwelle in einer ersten Ausführungsform,
- Figur 3: die Strömungsleitschaufel mit einer Lagerwelle in einer zweiten, aus dem Stand der Technik bekannten Ausführungsform,
- Figur 4: die Strömungsleitschaufel mit einer Lagerwelle in einer ersten erfindungsgemäßen Ausführungsform, und
- Figur 5: die Strömungsleitschaufel mit einer Lagerwelle in einer zweiten erfindungsgemäßen Ausführungsform.

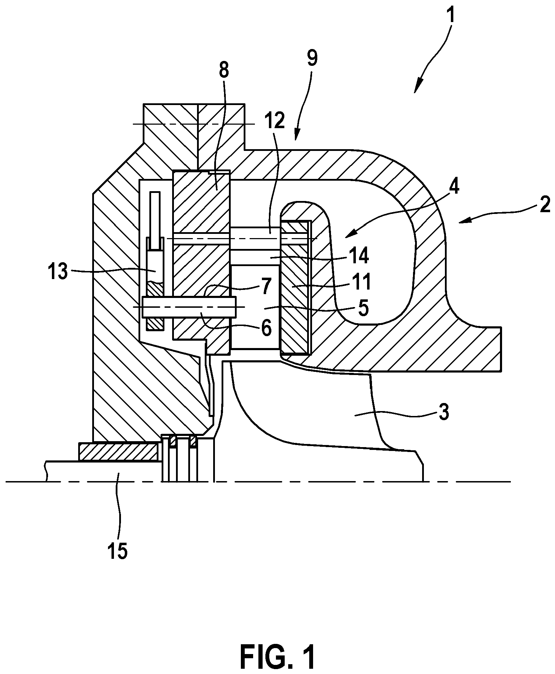

Die Figur 1 zeigt eine Aufladeeinrichtung 1 mit einer Turbine 2, insbesondere Abgasturbine, welche über ein Turbinenrad 3 verfügt. Das Turbinenrad 3 wird über ein Verstellschaufelsystem 4 radial angeströmt, eine Abströmung von dem Turbinenrad 3 erfolgt axial (in Figur 1 nach rechts). Das Verstellschaufelsystem 4 verfügt über mindestens eine Strömungsleitschaufel 5, welche in dem Strömungsweg des auf das Turbinenrad 3 zuströmenden Abgases angeordnet ist. Die Strömungsleitschaufel 5 ist mittels einer Lagerwelle 6 schwenkbar gelagert. Die Lagerwelle 6 sitzt dazu in einer Ausnehmung 7 eines Gehäusebauteils 8 - welches Bestandteil eines Gehäuses 9 der Turbine 2 ist - ein. Das Gehäusebauteil 8 ist zum Beispiel eine Lagerscheibe 10 der Aufladeeinrichtung 1. Gegenüber der Lagerscheibe 10 ist eine Deckscheibe 11 vorgesehen. Zwischen Lagerscheibe 10 und Deckscheibe 11 ist die Strömungsleitschaufel 5 angeordnet. Zum Verstellen der Strömungsleitschaufel ist ein ausreichender Abstand zwischen Lagerscheibe 10 und Deckscheibe 11 notwendig. Um diesen zu gewährleisten, ist zusätzlich ein Abstandshalter 12 zwischen Lagerscheibe 10 und Deckscheibe 11 vorgesehen. Die Strömungsleitschaufel 5 weist vorzugsweise sowohl von der Lagerscheibe 10 als auch von der Deckscheibe 11 einen geringen Abstand auf, um auf diese Weise ein zuverlässiges und leichtgängiges Verstellen der Strömungsleitschaufel 5 zu ermöglichen.

Auf der der Strömungsleitschaufel 5 abgewandten Seite der Lagerwelle 6 ist eine Verstelleinrichtung 13 vorgesehen und drehfest mit der Lagerwelle 6 verbunden.

Mittels der Verstelleinrichtung 13 kann ein Drehmoment auf die Lagerwelle 6 aufgebracht werden und somit die Strömungsleitschaufel 5 verstellt werden. Mit dem Verstellen der Strömungsleitschaufel 5 kann ein Anströmwinkel des Turbinenrads 3 entsprechend eines Belastungszustands einer Brennkraftmaschine (nicht dargestellt), welcher der Aufladeeinrichtung 1 zugeordnet ist, eingestellt werden. So kann beispielsweise bei einer geringen Belastung der Brennkraftmaschine der Strömungsquerschnitt in einem Strömungskanal 14, in welchem die Strömungsleitschaufel 5 angeordnet ist, verringert werden. Auf diese Weise ist die Anströmungsgeschwindigkeit des Turbinenrads 3 trotz geringem Abgasmassenstroms durch die Aufladeeinrichtung 1 beziehungsweise die Turbine 2 ausreichend hoch, um das Turbinenrad 3 anzutreiben. Entsprechend wird bei hoher Belastung der Brennkraftmaschine, was gleichbedeutend mit einem großen Abgasmassenstrom ist, der Strömungsquerschnitt des Strömungskanals 14 vergrößert, sodass die Turbine 2 keinen unnötig hohen Strömungswiderstand beziehungsweise Druckverlust erzeugt und die in dem Abgas enthaltene Energie vorteilhaft zum Antrieb des Turbinenrads 3 zur Verfügung steht. Das von dem Abgas angetriebene Turbinenrad 3 treibt seinerseits über eine Welle 15 beispielsweise ein Verdichterrad (nicht dargestellt) der Aufladeeinrichtung 1 an.

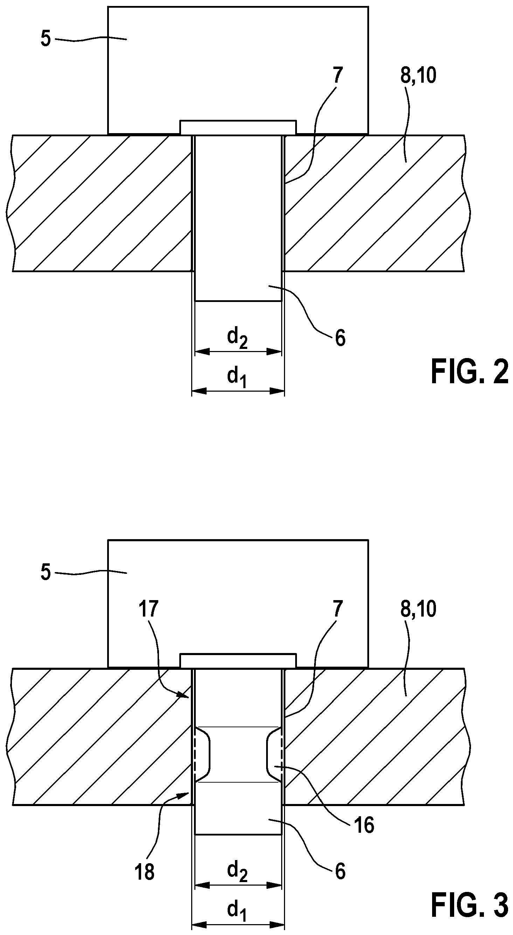

Die Figur 2 zeigt eine erste, aus dem Stand der Technik bekannte Ausführungsform der Strömungsleitschaufel 5 mit der Lagerwelle 6. Letztere ist, wie bereits vorstehend beschrieben, in der Ausnehmung 7 des Gehäusebauteils 8 beziehungsweise der Lagerscheibe 10 drehbar gelagert. Bei dieser Ausführungsform weist die Ausnehmung 7 einen konstanten Ausnehmungsdurchmesser d₁ und die Lagerwelle 6 einen konstanten Lagerwellendurchmesser d₂ auf. Dabei ist es vorgesehen, dass der Lagerwellendurchmesser im Wesentlichen dem Ausnehmungsdurchmesser entspricht oder geringfügig kleiner ist, sodass ein leichtgängiges Verstellen der Strömungsleitschaufel 5 mittels der Lagerwelle 6 gewährleistet ist.

Die Figur 3 zeigt eine zweite, aus dem Stand der Technik bekannte Ausführungsform der Strömungsleitschaufel 5 und der Lagerwelle 6. Auch in diesem Fall ist die Lagerwelle 6 in der Ausnehmung 7 des Gehäusebauteils 8 gelagert. Ebenso wie in dem in der Figur 2 gezeigten Ausführungsbeispiel ist der Ausnehmungsdurchmesser d₁ konstant. Auch der Wellendurchmesser d₂ ist im Wesentlichen konstant. Allerdings weist die Lagerwelle 6 in einem Bereich eine Einschnürung 16 auf, sodass der Durchmesser hier verringert ist (in Figur 3 angedeutet mit den gestrichelten Linien). Auf diese Weise liegt eine erste Lagerstelle 17 und eine zweite Lagerstelle 18 vor, an welchen die Lagerwelle 6 mit der Innenwand der Ausnehmung 7 in Berührkontakt steht. Auf diese Weise kann der Drehwiderstand der Lagerwelle, also das Drehmoment, welches einem zum Verstellen der Strömungsleitschaufel 5 verwendeten Verstellmoment entgegenwirkt, verringert werden, da die Auflagefläche der Lagerwelle 6 auf der Innenwand der Ausnehmung 7 verringert wird.

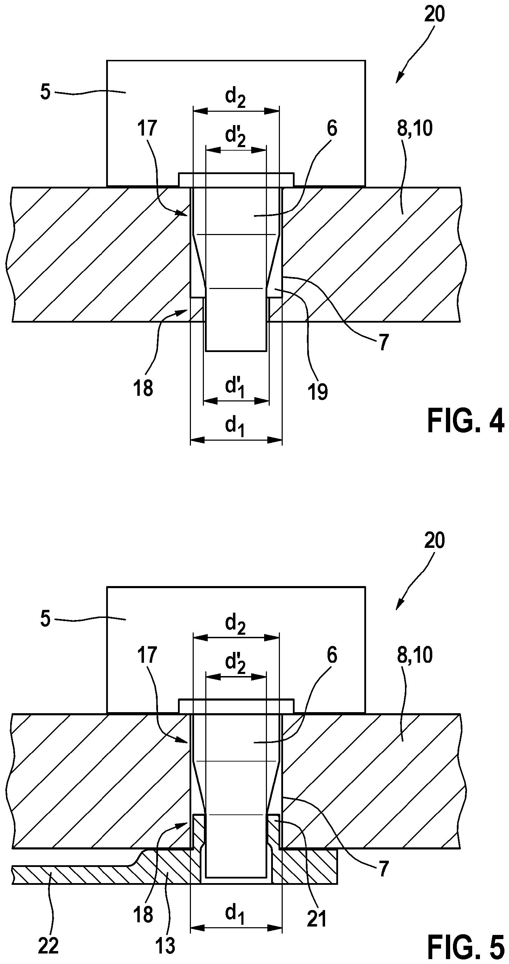

Die Figur 4 zeigt eine erste erfindungsgemäße Ausführungsform der Strömungsleitschaufel 5 und der Lagerwelle 6. Es wird deutlich, dass ebenso wie in dem Ausführungsbeispiel der Figur 3 zwei Lagerstellen 17 und 18 vorliegen. Im Gegensatz zu dem genannten Ausführungsbeispiel weisen jedoch die Lagerstellen 17 und 18 unterschiedliche Durchmesser auf. Der Durchmesser kann dabei beispielsweise mit dem Durchmesser definiert sein, bei welchem die Lagerwelle 6 mit der Innenwand der Ausnehmung 7 zur Ausbildung der Lagerstellen 17 und 18 in Berührkontakt tritt. Vereinfacht kann der Durchmesser der Lagerstellen 17 und 18 mit dem Wellendurchmesser im Bereich der Lagerstellen 17 und 18 angenommen werden. Alternativ kann der Durchmesser auch als Mittelwert aus Wellendurchmesser und Ausnehmungsdurchmesser definiert sein.

In der hier dargestellten Ausführungsform ist die Ausnehmung 7 eine Stufenausnehmung 19 beziehungsweise Stufenbohrung. Diese ist einfach herstellbar, indem zwei Bohrvorgänge mit unterschiedlichen Durchmessern durchgeführt werden. Es ist vorgesehen, dass die Lagerwelle 6 in dem Bereich der ersten Lagerstelle 17, welche auf der der Strömungsleitschaufel 5 zugewandten Seite der Lagerwelle 6 liegt, einen größeren Durchmesser aufweist, als im Bereich der zweiten Lagerstelle 18. Es liegt also sowohl eine gestufte Lagerwelle 6 als auch eine gestufte Ausnehmung 7 vor, welche gemeinsam die Lagerstellen 17 und 18 ausbilden. Dabei ist es vorgesehen, dass die Strömungsleitschaufel 5 und die Lagerwelle 6 als gemeinsames Bauteil 20 hergestellt sind. In diesem Zusammenhang ist die gestufte Ausführungsform der Lagerwelle 6 mit den ausgehend von der Strömungsleitschaufel 5 abnehmenden Durchmessern vorteilhaft: Durch die Abstufung der Durchmesser der Lagerwelle 6 ist ein Entformen der Strömungsleitschaufel 5 und der Lagerwelle 6 aus einem Spritzgießwerkzeug einfach möglich, ohne dass ein Schieber vorgesehen sein muss. Vor allem treten keine Beschädigungen der Lagerwelle 6 bei dem Entformen auf, sodass eine Nachbearbeitung (beispielsweise Feindrehen und/oder Schleifen) nicht notwendig ist. Im Bereich der ersten Lagerstelle 17 weist die Ausnehmung den Ausnehmungsdurchmesser d₁ und die Lagerwelle 6 den Wellendurchmesser d₂ auf. Im Bereich der zweiten Lagerstelle 18 liegt der Ausnehmungsdurchmesser d'₁ und der Wellendurchmesser d'₂ vor. Dabei gilt d'₁ < d₁ und d'₂ < d₂.

Mittels der Lagerscheibe 10 wird zunächst eine Lagerung der Strömungsleitschaufel 5 erreicht. Sie wird auf der der Strömungsleitschaufel 5 zugewandten Seite mit heißem Abgas beaufschlagt und dient damit zur einseitigen Begrenzung des Strömungskanals 14 (Turbinenraum). Sie bildet zusammen mit der Kontur der Strömungsleitschaufel 5 und der Deckscheibe 11 die Düsengeometrie der Turbine 2 aus. Sie ist somit gemeinsam mit diesen in hohem Maße für den Wirkungsgrad der Turbine 2 verantwortlich.

Die Figur 5 zeigt eine zweite erfindungsgemäße Ausführungsform der Strömungsleitschaufel 5 und der Lagerwelle 6. Dabei sind diese prinzipiell ähnlich aufgebaut wie in dem Ausführungsbeispiel der Figur 4, sodass in diesem Zusammenhang auf diese verwiesen wird. Im Unterschied zu der Ausführungsform der Figur 4 weist die Ausnehmung 7 jedoch keine Abstufung auf, ist also keine Stufenausnehmung 19. Vielmehr weist die Ausnehmung 7 einen gleichbleibenden Durchmesser d₁ auf. Im Bereich des kleineren Wellendurchmessers d'₂ ist daher ein Lagerelement 21 angeordnet, welches den Unterschied zwischen dem Wellendurchmesser d'₂ und dem Ausnehmungsdurchmesser d₁ ausgleicht. Das Lagerelement 21 ist beispielsweise ein Ringelement, ist also ringförmig. Der innere Durchmesser des Ringelements entspricht dabei im Wesentlichen dem Wellendurchmesser und der äußere dem Ausnehmungsdurchmesser. Dabei können jeweils Abweichungen des inneren und/oder äußeren Durchmesser vorgesehen sein, um das leichtgängige Verstellen der Strömungsleitschaufel 5 sicherzustellen. Das Lagerelement 21 kann entweder auf der Lagerwelle 6 oder in der Ausnehmung 7 befestigt sein. In dem hier dargestellten Ausführungsbeispiel ist es auf die Lagerwelle 6 aufgepresst, also kraftschlüssig beziehungsweise reibschlüssig mit dieser verbunden. Das Lagerelement 21 ist Teil der Verstelleinrichtung 13 und dabei mit einem Verstellhebel 22 wirkverbunden. Zum Verstellen der Strömungsleitschaufel 5 wird der Verstellhebel 22 betätigt, womit auf die Lagerwelle 6 ein Drehmoment aufgeprägt wird, welches das Verstellen der Strömungsleitschaufel 5 bewirkt.

Die anhand der Figuren 4 und 5 beschriebenen Ausführungsbeispiele der Strömungsleitschaufel 5 und Lagerwelle 6 weisen, wie bereits vorstehend beschrieben, Vorteile hinsichtlich der Fertigung auf, da sie einfach als gemeinsames Bauteil 20 hergestellt werden können. Die unterschiedlichen Durchmesser der Lagerstellen 17 und 18 bewirken jedoch auch eine deutliche Reduzierung des Drehwiderstands bei einem Verstellen der Strömungsleitschaufel 5. Ebenso vorteilhaft sind daher Ausführungsformen, bei welchen der Wellendurchmesser konstant bleibt und der Ausnehmungsdurchmesser ausgehend von der Strömungsleitschaufel 5 größer wird. Der Unterschied zwischen dem Wellendurchmesser und dem Ausnehmungsdurchmesser im Bereich der zweiten Lagerstelle 18 kann in diesem Fall wiederum durch das Lagerelement 21 ausgeglichen werden.

## Patentansprüche

1. Abgasturbolader (1) eines Fahrzeugs, mit einer Turbine (2), die mindestens eine Strömungsleitschaufel (5) für ein Medium aufweist, wobei ein Turbinenrad (3) der Turbine (2) über die mindestens eine Strömungsleitschaufel (5) radial angeströmt wird und die Strömungsleitschaufel (5) an einem Gehäusebauteil (8) des Abgasturboladers (1) mittels einer in einer Ausnehmung (7) des Gehäusebauteils (8) einsitzenden Lagerwelle (6) schwenkbar gelagert ist, wobei die Lagerwelle (6) und die Ausnehmung (7) mindestens zwei in axialer Richtung voneinander beabstandete Lagerstellen (17,18) aufweisen, die auf der Lagerwelle (6) unterschiedliche Durchmesser (d₂, d'₂) besitzen und von denen die eine, der Strömungsleitschaufel (5) zugewandte Lagerstelle (17) durch die Lagerwelle (6) und die Ausnehmung (7) gebildet ist, während die andere Lagerstelle (18) entweder durch die Lagerwelle (6) und die Ausnehmung (7) gebildet ist oder durch die Lagerwelle (6), die Ausnehmung (7) und ein Lagerelement (21) gebildet ist, **dadurch gekennzeichnet, dass** zwischen den Lagerstellen (17,18) eine kontinuierliche Änderung des Wellendurchmessers vorgesehen ist.

2. Abgasturbolader nach Anspruch 1, **dadurch gekennzeichnet, dass** die Lagerstelle (17), welche den größeren Durchmesser (d₂) aufweist, auf der der Strömungsleitschaufel (5) zugewandten Seite angeordnet ist.

3. Abgasturbolader nach einem der vorhergehenden Ansprüche, **dadurch gekennzeichnet, dass** zumindest im Bereich der einen Lagerstelle (17) der Ausnehmungsdurchmesser (d₁) im Wesentlichen dem Wellendurchmesser (d₂) entspricht.

4. Abgasturbolader nach einem der vorhergehenden Ansprüche, **dadurch gekennzeichnet, dass** die Ausnehmung (7) als Stufenausnehmung (19) oder als Ausnehmung (7) mit konstantem Durchmesser (d₁) vorliegt.

5. Abgasturbolader nach einem der vorhergehenden Ansprüche, **dadurch gekennzeichnet, dass** das Lagerelement (21) der Lagerwelle (6) zugeordnet ist.

6. Abgasturbolader nach einem der vorhergehenden Ansprüche, **dadurch gekennzeichnet, dass** das Lagerelement (21) kraftschlüssig, formschlüssig und/oder stoffschlüssig an der Lagerwelle (6) befestigt ist.

7. Abgasturbolader nach einem der vorhergehenden Ansprüche, **dadurch gekennzeichnet, dass** das Lagerelement (21) Teil einer Verstelleinrichtung (13) für die Lagerwelle (6) ist, sodass die Verstelleinrichtung (13) im Bereich des Lagerelements (21) mit der Lagerwelle (6) und der Ausnehmung (7) zusammenwirkt, um die andere Lagerstelle (18) auszubilden.

8. Abgasturbolader nach einem der vorhergehenden Ansprüche, **dadurch gekennzeichnet, dass** die Lagerwelle (6) und die Leitschaufel (5) als ein gemeinsames Bauteil (20), insbesondere mittels eines Spritzgießverfahrens, hergestellt sind.

## Claims

1. Turbo-supercharger (1) of a vehicle, with a turbine (2) which comprises at least one flow guide blade (5) for a medium, wherein a flow of medium radially impacts on a turbine wheel (3) of the turbine (2) via the at least one flow guide blade (5) and the flow guide blade (5) is rotatably mounted on a housing part (8) of the turbo-supercharger (1) by means of a bearing shaft (6) seated in a recess (7) of the housing part (8), wherein the bearing shaft (6) and the recess (7) have at least two bearing points (17, 18) spaced apart from one another in the axial direction, which have different diameters (d₂, d'₂) on the bearing shaft (6) and one of which, the bearing point (17) facing towards the flow guide blade (5), is formed by the bearing shaft (6) and the recess (7), while the other bearing point (18) is formed either by the bearing shaft (6) and the recess (7) or is formed by the bearing shaft (6), the recess (7) and a bearing element (21), **characterised in that** a continuous change of the shaft diameter is provided between the bearing points (17, 18).

2. Turbo-supercharger according to claim 1, **characterised in that** the bearing point (17), which has the larger diameter (d₂), is arranged on the side facing towards the flow guide blade (5).

3. Turbo-supercharger according to any one of the preceding claims, **characterised in that** at least in the region of one bearing point (17) the recess diameter (d₁) corresponds substantially to the shaft diameter (d₂).

4. Turbo-supercharger according to any one of the preceding claims, **characterised in that** the recess (7) is present as a stepped recess (19) or as a recess (7) of constant diameter (d₁).

5. Turbo-supercharger according to any one of the preceding claims, **characterised in that** the bearing element (21) is associated with the bearing shaft (6).

6. Turbo-supercharger according to any one of the preceding claims, **characterised in that** the bearing element (21) is fixed by frictional engagement, positive engagement and/or adhesive or cohesive engagement to the bearing shaft (6).

7. Turbo-supercharger according to any one of the preceding claims, **characterised in that** the bearing element (21) is part of an adjustment device (13) for the bearing shaft (6), so that the adjustment device (13) in the region of the bearing element (21) cooperates with the bearing shaft (6) and the recess (7), in order to form the other bearing point (18).

8. Turbo-supercharger according to any one of the preceding claims, **characterised in that** the bearing shaft (6) and the guide blade (5) are formed as a common structural part (20), in particular by means of an injection moulding method.

## Revendications

1. Turbocompresseur à gaz d'échappement (1) d'un véhicule, avec une turbine (2), qui présente au moins une pale de guidage d'écoulement (5) pour un milieu, dans lequel une roue de turbine (3) de la turbine (2) est parcourue radialement par l'intermédiaire de l'au moins une pale de guidage d'écoulement (5) et la pale de guidage d'écoulement (5) est logée de manière pivotante au niveau d'un composant de boîtier (8) du turbocompresseur à gaz d'échappement (1) au moyen d'un arbre de palier (6) logeant dans un évidement (7) du composant de boîtier (8), dans lequel l'arbre de palier (6) et l'évidement (7) présentent au moins deux points de palier (17, 18) espacés dans le sens axial l'un de l'autre, qui possèdent différents diamètres (d₂, d'₂) sur l'arbre de palier (6), et dont l'un point de palier (17) tourné vers la pale de guidage d'écoulement (5) est formé par l'arbre de palier (6) et l'évidement (7), alors que l'autre point de palier (18) est formé par l'arbre de palier (6) et l'évidement (7) ou est formé par l'arbre de palier (6), l'évidement (7) et un élément de palier (21), **caractérisé en ce qu'**une modification continue du diamètre d'arbre est prévue entre les points de palier (17, 18).

2. Turbocompresseur à gaz d'échappement selon la revendication 1, **caractérisé en ce que** le point de palier (17) qui présente le plus grand diamètre (d₂) est disposé sur le côté tourné vers la pale de guidage d'écoulement (5).

3. Turbocompresseur à gaz d'échappement selon l'une quelconque des revendications précédentes, **caractérisé en ce qu'**au moins dans la zone d'un point de palier (17), le diamètre d'évidement (d₁) correspond sensiblement au diamètre d'arbre (d₂).

4. Turbocompresseur à gaz d'échappement selon l'une quelconque des revendications précédentes, **caractérisé en ce que** l'évidement (7) se présente en tant qu'évidement étagé (19) ou en tant qu'évidement (7) avec un diamètre constant (d₁).

5. Turbocompresseur à gaz d'échappement selon l'une quelconque des revendications précédentes, **caractérisé en ce que** l'élément de palier (21) est associé à l'arbre de palier (6).

6. Turbocompresseur à gaz d'échappement selon l'une quelconque des revendications précédentes, **caractérisé en ce que** l'élément de palier (21) est fixé à force, à complémentarité de formes et/ou par matière à l'arbre de palier (6).

7. Turbocompresseur à gaz d'échappement selon l'une quelconque des revendications précédentes, **caractérisé en ce que** l'élément de palier (21) fait partie d'un dispositif de réglage (13) pour l'arbre de palier (6) de sorte que le dispositif de réglage (13) coagisse, dans la zone de l'élément de palier (21), avec l'arbre de palier (6) et l'évidement (7) afin de réaliser l'autre point de palier (18).

8. Turbocompresseur à gaz d'échappement selon l'une quelconque des revendications précédentes, **caractérisé en ce que** l'arbre de palier (6) et la pale de guidage (5) sont fabriqués en tant que composant commun (20), en particulier au moyen d'un procédé de moulage par injection.
